# EUROPEAN PATENT APPLICATION

(11) **EP 0 980 664 A2**
(43) Date of publication of application: **23.02.2000**
(21) Application number: 99305221.6
(22) Date of filing: 01.07.1999
(51) Int. Cl.: A47J 19/02, A47J 43/07

(54) **Feed tube**

(30) Priority: 17.08.1998 AU PP529998
(71) Applicant: Breville Pty Ltd., Botany, New South Wales 2019 (AU)
(72) Inventor: McClean, Stephen, Botany, New South Wales, 2019 (AU)
(74) Representative: Smith, Norman Ian

(57) **Abstract**

The present invention relates to feed tubes and in particular to feed tubes for introducing food matter into kitchen appliances, for instance introducing fruit and vegetable matter into juicers or graters, or the like. In another aspect the invention is a kitchen appliance incorporating the feed tube. The feed tube (16) is equipped with an internal arm (30) arranged to extend away from the inner wall of the tube (16) to bar rotation of food matter in the tube (16). The arm (30) is constructed or mounted in a manner that allows it to be pushed against the interior wall of the feed tube (16) by a food pusher (19) as the food pusher (19) descends past it.

## Description

### Technical Field

The present invention relates to feed tubes and in particular to feed tubes for introducing food matter into kitchen appliances. for instance introducing fruit and vegetable matter into juicers or graters. or the like. In another aspect the invention is a kitchen appliance incorporating the feed tube.

### Background Art

In the environment of feeding materials, such as fruit or vegetables, to an appliance to be grated or pulped or for juice extraction, the material is inserted into a tube and fed by a pusher which pushes the food material into contact with a rotating disc.

A problem arises were the food material is not firmly wedged in the feed tube during its motion toward the grating disc or similar such that the material will tend to be rotated by the disc to move in a circular path under the centrifugal force imparted by the disc to the material. In EP 684000 A1 there is disclosed a feed tube arrangement in combination with a fruit and vegetable juicer where a knife or knives project inwardly of the feed tube to act as a barrier to prevent rotation of the material being processed under the centrifugal force imparted by a grating disc so that the complete grating operation can be effected. Such arrangements make it necessary for the food pusher to be orientated in a predetermined relationship to the tube so that the knife or knives enter into slots in the pusher as the food material is pushed down toward the grating disc. In this way the knife or knives do not interfere with the pushing operation.

Not only is it a safety concern where a knife or knives are located within a feed tube. but it is also necessary to orient the food pusher for its correct operation each time the feed tube is charged. That need to orient the food pusher is an inconvenience which can slow the throughput of food material through the food processing device.

### Summary of the Invention

The invention is a feed tube for introducing food matter into kitchen appliances. the tube being equipped with an internal arm arranged to extend away from the inner wall of the tube to bar rotation of food matter in the tube. The arm is constructed or mounted in a manner that allows it to be pushed against the interior wall of the feed tube by a food pusher as the food pusher descends past it.

The arm may comprise an elongate plate of spring metal which is shaped to extend away from the inner wall of tube.

An alternative construction for arm involves a resiliently biased hinge connection between a relatively inflexible arm and the inner side wall of tube.

In another aspect the invention is a kitchen appliance incorporating the feed tube.

### Brief Description of the Drawings

The present invention will now be described by way of example with reference to the accompanying drawing, in which:-
Fig 1 is a perspective view showing the external appearance of a fruit and vegetable juicer in accord with the embodiment of EP 684000 A1;
Fig 2 is a cross-sectional view through the centre of the feed tube of Fig 1 and incorporating an embodiment of the present invention:
Fig 3 is a view similar to Fig 2 showing the embodiment of the present invention in use in the juicer: and
Fig 4 is a perspective view of a transparent feed tube and pusher in accord with the embodiment as shown in the juicer of Figs 2 and 3.

### Best Modes of the Invention

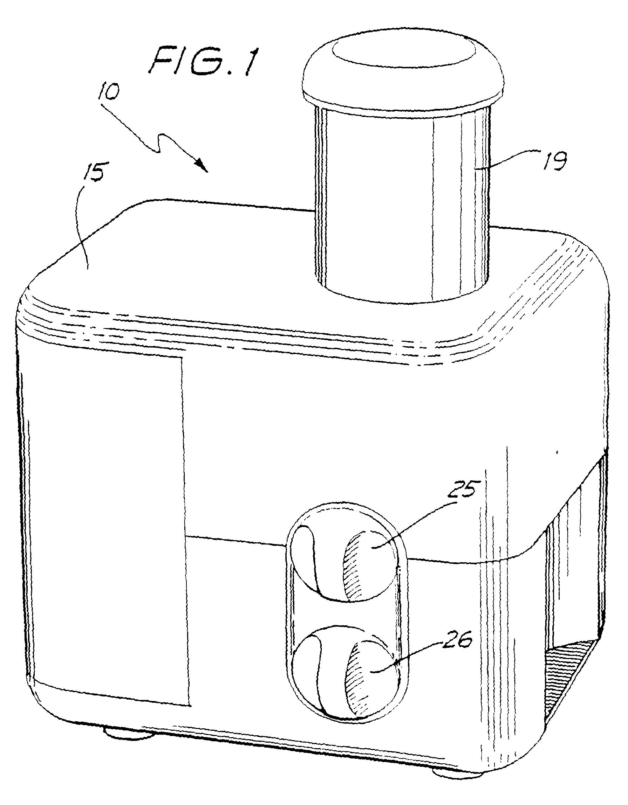

The fruit and vegetable juicer shown in Fig 1 consists of a casing 10 which accommodates the working parts of the apparatus including an electric motor 11. Associated with the casing 10 is a removable juice receptacle 12.

The motor 11 drives the shaft 11a which drives a grating disc 13 at high speed. The grating disc is integral with and surrounded by a sieve member 14 that is generally frusto-conical in shape and which is provided on its sloping surface with very fine openings through which juice can pass. The sieve member 14 may be made of very fine mesh expanded stainless steel. This has been found to give superior results to the type of material conventionally used, particularly in its ability to shed fibres and not clog.

The casing 10 has a cover 15 which is formed integrally with a feed tube 16. The casing 10 also accommodates a fibre collecting container indicated at 12a. The majority of features described to this point are generally conventional and are to be found in most fruit and vegetable juicers.

The internal diameter of the feed tube 16 is substantially the same as the diameter of the grating disc 13. Preferably the feed tube 16 is slightly smaller at its upper end than further down. This ensures that any piece of fruit that can be introduced into the upper end of the tube can pass freely down it.

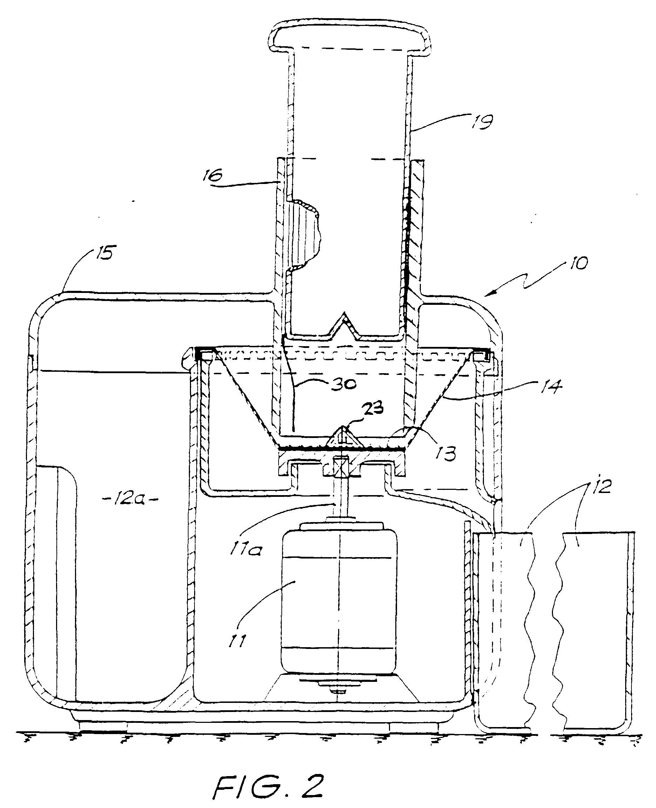

In Fig 2 the feed tube 16 is seen to be provided with a series of longitudinally extending grooves separated by intervening lands to reduce friction on fruit or vegetables being introduced into the tube 16.

In order to push food down on to the grating disc 13 there is provided a food pusher 19 and as is best seen in Fig 2.

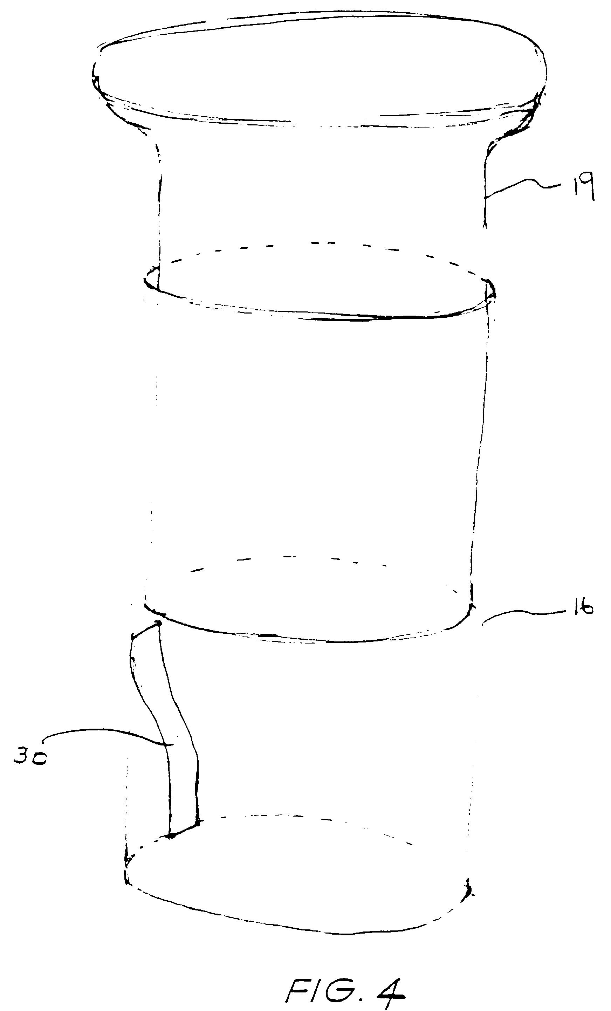

The feed tube depicted in Figs 2, 3 and 4 is equipped with a downwardly depending arm 30 flexibly cantilevered from the inner wall of feed tube 16.

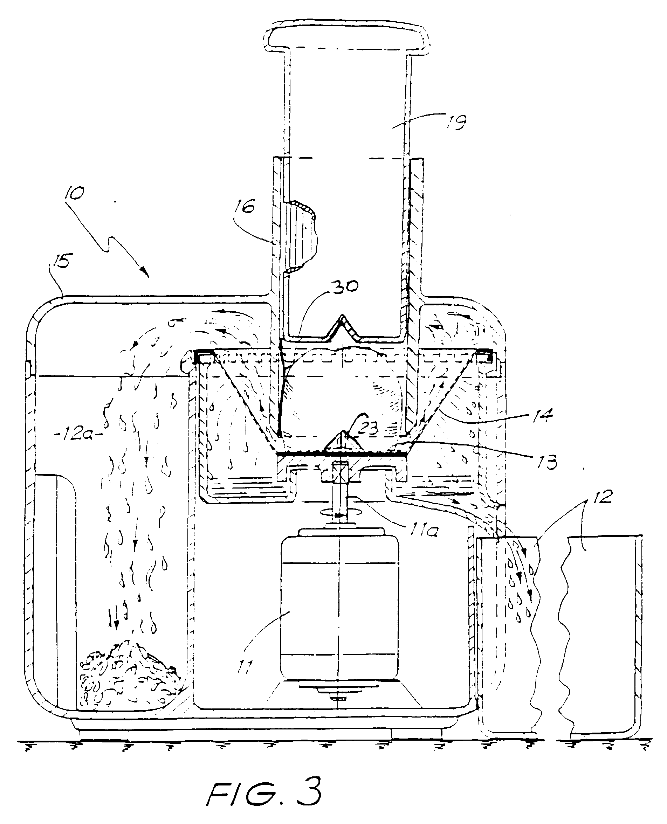

Interaction between a piece of fruit and arm 30, when in use, is shown in Fig 3 where that arm presses the fruit against the inner wall of tube 16. As the dimensions of the fruit are reduced by the grating action, arm 30 flexes inwardly of tube 16 to act as a barrier to rotation of the fruit within the tube under the action of grating disc 13.

Arm 30 as shown in the embodiment of Figs 2 to 4 is provided as an elongate plate of spring metal which is shaped to extend away from the inner wall of tube 16. The plate is flattened against the inner wall of tube 16 under the downward motion of pusher 19 and returns to its extended position when pusher 19 is withdrawn from tube 16.

An alternative construction for arm 30 within tube 16 involves a resiliently biased hinge connection between a relatively inflexible arm 30 and the inner side wall of tube 16 in place of relying on the resilient flexure of arm 30 as shown in the embodiment depicted in Figs 3-5.

It will be appreciated by persons skilled in the art that numerous variations and/or modifications may be made to the invention as shown in the specific embodiments without departing from the spirit or scope of the invention as broadly described. The present embodiments are. therefore, to be considered in all respects as illustrative and not restrictive.

## Claims

1. A feed tube for introducing food matter into kitchen appliances. the tube being equipped with an internal arm arranged to extend away from the inner wall of the tube to bar rotation of food matter in the tube; where the arm is constructed or mounted in a manner that allows it to be pushed against the interior wall of the feed tube by a food pusher as the food pusher descends past it.

2. A feed tube according to claim 1, where the arm comprises an elongate plate of spring metal which is shaped to extend away from the inner wall of tube.

3. A feed tube according to claim 1, where the arm comprises a resiliently biased hinge connection between a relatively inflexible arm and the inner side wall of tube.

4. A kitchen appliance incorporating a feed tube according to any preceding claim.
